# EUROPÄISCHE PATENTSCHRIFT

(11) **EP 2 148 124 B1**
(45) Veröffentlichungstag und Bekanntmachung des Hinweises auf die Patenterteilung: **13.04.2016**
(21) Anmeldenummer: 09006783.6
(22) Anmeldetag: 20.05.2009
(51) Int. Cl.: F16L 59/14, F16L 57/04

(54) **Flammschutzeinrichtung für eine Rohrkupplung und Rohrkupplung**
Flame-retardant device for a tube coupling and tube coupling
Dispositif de protection contre les flammes pour une jonction de tuyaux et jonction de tuyaux

(30) Priorität: 24.07.2008 DE 102008034435
(43) Veröffentlichungstag der Anmeldung: 27.01.2010
(73) Patentinhaber: NORMA Germany GmbH, 63477 Maintal (DE)
(72) Erfinder: Krämer, Markus, 63533 Mainhausen (DE)
(74) Vertreter: Patentanwälte Olbricht Buchhold Keulertz

(56) Entgegenhaltungen:
- EP-A- 0 486 299
- DE-U1- 20 014 142
- GB-A- 2 233 725
- US-A- 5 947 159
- US-A- 6 029 412

## Beschreibung

Die Erfindung betrifft eine Rohrkupplung mit einer Flammschutzeinrichtung, die ein die Rohrkupplung umgebendes Gehäuse und eine Flammschutzeinlage an der Innenseite des Gehäuses aufweist, wobei das Gehäuse um die Rohrkupplung herum legbar ist.

Ferner betrifft die Erfindung eine Flammschutzeinrichtung einer derartigen Rohrkupplung.

Eine derartige Rohrkupplung ist aus DE 200 14 142 U1 bekannt, dieses Dokument entspricht dem Oberbegriff des Anspruchs 1 . Über das Gehäuse sind mehrere Lagen aus einem Keramikgeflecht gewunden, die den eigentlichen Flammenschutz übernehmen. Das Keramikgeflecht ist durch einen metallischen Schutzmantel nach außen geschützt und gegen das Gehäuse gedrückt gehalten. Der Schutzmantel ist mittels Nieten mit dem Gehäuse verbunden, so dass Schutzmantel, Keramikgeflecht und Gehäuse eine Einheit bilden.

Eine Rohrkupplung dient dazu, zwei Rohrenden miteinander zu verbinden. Üblicherweise weist die Rohrkupplung an ihrer radialen Innenseite eine Dichtung aus einem elastomeren Material auf, die eine Trennfuge zwischen den beiden Rohrenden abdichtet, so dass ein Fluid, das von einem Rohr zum anderen strömt, durch die Trennfuge nicht austreten kann.

In feuergefährdeten Bereichen muss die Rohrkupplung gegen Flammen geschützt werden. Beispielsweise kann es notwendig werden, die Dichtung gegen eine Beaufschlagung durch Flammen abzusichern. Dementsprechend verwendet man in einem feuergefährdeten Bereich Rohrkupplungen, die jeweils mit einer Flammschutzeinrichtung versehen sind. Eine mit einer Flammschutzeinrichtung versehene Rohrkupplung ist zwar etwas teurer. Ihre Montage ist aber normalerweise ohne Probleme möglich.

Eine andere Situation ergibt sich dann, wenn sich in Bereichen, in denen eine normale Rohrkupplung angeordnet ist, eine Änderung ergibt. Diese Änderung kann durch eine Veränderung äußerer Umstände bedingt sein. Sie kann aber auch durch eine Veränderung einer Bewertung bedingt sein. So werden beispielsweise im Schiffbau immer mehr Bereiche als feuergefährdet eingestuft. Dementsprechend müssen in den neu als feuergefährdet eingestuften Bereichen die normalen Rohrkupplungen durch Rohrkupplungen ersetzt werden, die mit einer Flammschutzeinrichtung versehen sind. Dies bedeutet einen erheblichen Aufwand. Der Leitungsstrang, der mit der Rohrkupplung versehen ist, muss entleert werden. Die normale oder alte Rohrkupplung muss demontiert und eine neue, mit einer Flammschutzeinrichtung versehene Rohrkupplung muss montiert werden. Dies bedeutet einen erheblichen Aufwand.

US 5 947 159 A zeigt eine Ausgestaltung, bei der man eine Öffnung, durch die ein Rohr geführt ist, dadurch gegen einen Flammendurchtritt schützt, dass man dieses Rohr mit einem Feuer aufhaltenden Element versieht. Dieses Feuer aufhaltende Element wird auf dem Rohr in die Öffnung eingeschoben. Das Feuer aufhaltende Element weist ein elastisches C-förmiges Metallelement auf. Ein thermisches Expansionsmaterial ist innerhalb des Metallelements angeordnet. Zungen sind am axialen Ende des Metallelements radial nach innen zeigend angeordnet. Diese sichern allerdings nur dagegen, dass das Expansionsmaterial beim Verschieben des Metallelements auf dem Rohr gegenüber dem Metallelement verschoben wird.

GB 2 233 725 A zeigt einen Feuerschutzkragen für eine Rohrdurchführung. Dieser Schutzkragen weist mehrere ziegelsteinähnliche Elemente aus einem intumeszierenden Material auf, die an der Innenseite eines rohrförmigen Bandes befestigt sind. Dieses Band weist an seinen axialen Enden Laschen auf, die radial und axial nach innen umgebogen werden können, um die ziegelsteinförmigen Elemente festzuhalten. Der Kragen wird auf dem Rohr befestigt an einer Position, wo das Rohr aus einer Wand austritt. Damit soll verhindert werden, dass in einem Feuerfall Flammen durch die Öffnung in der Wand hindurchtreten.

US 6 029 412 A zeigt einen ähnlichen Schutzkragen mit einem intumeszierenden Material. Ein Ring wird um ein Rohr herum gelegt. Ankerelemente, die mit dem Ring verbunden sind, halten den Ring auf dem Rohr und zwar an einer Wand, wo das Rohr aus dieser Wand heraustritt. Auch mit dieser Einrichtung soll dafür gesorgt werden, dass in einem Feuerfall Flammen nicht durch die Öffnung in der Wand treten können.

EP 0 486 299 A1 zeigt eine Feuerschutzeinrichtung mit einem Ring mit Hitze führenden Nasen, die intumeszierendes Material mit dem Ring verbinden. Dadurch soll die Wärme, die von einem Feuer ausgeht, schneller in das intumeszierende Material geleitet werden, um es schneller anschwellen zu lassen. Ein angespritzter Kitt ist auf das intumeszierende Material aufgesetzt und soll zusätzlich dafür sorgen, dass eine Flamme nicht durch einen Spalt zwischen einer Wand und dem Rohr treten kann. Die Einrichtung wird mit Hilfe von Laschen an der Wand befestigt.

Der Erfindung liegt die Aufgabe zugrunde, mit geringem Aufwand Flammschutzanforderungen zu erfüllen.

Diese Aufgabe wird bei einer Rohrkupplung der eingangs genannten Art durch die kennzeichnenden Merkmale des Anspruchs 1 gelöst.

Damit wird es möglich, auf einfache Weise die Flammschutzeinrichtung bei einer bestehenden und an einem Leitungsstrang befestigten Rohrkupplung nachzurüsten. Da die Flammschutzeinlage am Gehäuse befestigt ist, kann man das Gehäuse mit der Flammschutzeinlage sozusagen als ein Teil handhaben. Das Gehäuse mit der darin befestigten Flammschutzeinlage wird einfach um die eingebaute Rohrkupplung herumgelegt und fixiert. Die Rohrkupplung weist dann eine Flammschutzeinrichtung auf und genügt den Flammschutzanforderungen. Durch die Befestigung der Flammschutzeinlage am Gehäuse ist auch sichergestellt, dass die für den Flammschutz notwendige Zuordnung von Flammschutzeinlage und Gehäuse auch nach dem Nachrüsten der Flammschutzeinrichtung an der Rohrkupplung erhalten bleibt. Rohrkupplungen sind vielfach an Stellen angeordnet, wo sie für einen Monteur nicht ohne Weiteres zugänglich sind. Durch das Zusammenfassen von Flammschutzeinlage und Gehäuse werden hier umständliche Montagevorgänge vermieden.

Die Befestigung muss dabei nicht genau an den Umfangsenden erfolgen. Ein gewisser Abstand zwischen den Umfangsenden der Flammschutzeinlage und der Befestigung am Gehäuse ist durchaus akzeptabel und vielfach auch gewünscht. Gleichwohl bleibt die Flammschutzeinlage mit dem Gehäuse verbunden und zwar sowohl beim Antransport als auch bei der Montage und später im betriebsbereiten Zustand.

Dies ist eine besonders einfache Möglichkeit, um die Flammschutzeinlage am Gehäuse zu befestigen. Die Flammschutzeinlage wird einfach, solange das Gehäuse noch in seiner gestreckten oder ausgebreiteten Form vorliegt, auf die Innenseite des Gehäuses aufgelegt. Danach werden die längeren Abschnitte der Wände axial nach innen umgebogen. Sie halten dann die Flammschutzeinlage formschlüssig am Gehäuse fest. Eine gewisse Beweglichkeit in Umfangsrichtung zwischen dem Gehäuse und der Flammschutzeinlage ist noch möglich. Allerdings ist diese Beweglichkeit so klein, dass die räumliche Zuordnung zwischen der Flammschutzeinlage und dem Gehäuse in gewünschtem Maße erhalten bleibt.

Vorzugsweise weist der längere Abschnitt im Bereich einer Biegelinie eine Materialschwächung auf. Dies erleichtert es, den über die Flammschutzeinlage überstehenden Bereich des längeren Abschnitts axial nach innen umzubiegen. Die Materialschwächung bewirkt, dass die Biegung an einer klar definierten Position erfolgt. Diese Position kann beispielsweise so gewählt sein, dass der axial nach innen umgebogene Teil des längeren Abschnitts die Dicke der Flammschutzeinlage berücksichtigt, die Flammschutzeinlage also in radialer Richtung nicht oder nicht wesentlich komprimiert.

Hierbei ist bevorzugt, dass die Materialschwächung mindestens einen Schlitz aufweist. Ein Schlitz kann beim Herstellen des Gehäuses leicht erzeugt werden, beispielsweise durch Stanzen. Durch den Schlitz wird Material aus dem längeren Abschnitt entfernt, so dass das verbleibende Material einer Biegung nur noch einen geringen Widerstand entgegensetzt.

Vorzugsweise ist das Gehäuse schweißlos gefertigt. Dies hat mehrere Vorteile. Zum Einen wird der Vorgang des Schweißens eingespart, wie er bei bisherigen Flammschutzeinrichtungen erforderlich war. Zum Anderen wird die Korrosionsbeständigkeit erhöht, was insbesondere bei der Verwendung einer Flammschutzeinrichtung im Schiffbau von Vorteil ist. Bei Seeschiffen führt der Salzgehalt des Meerwassers und der damit verbundene erhöhte Salzgehalt der Luft vielfach zu Korrosionserscheinungen, die sich bei einer Schweißnaht in verstärktem Maße zeigen. Das Gehäuse der vorliegenden Flammschutzeinrichtung wird einfach durch Biegen hergestellt, ohne dass man einen Schweißvorgang benötigt.

Bevorzugterweise weist das Gehäuse an jedem Umfangsende eine Befestigungsgeometrie auf, wobei eine erste Befestigungsgeometrie an einem Umfangsende mit einer zweiten Befestigungsgeometrie am anderen Umfangsende in Eingriff bringbar ist. Damit kann das Gehäuse auf einfache Weise an der Rohrkupplung befestigt werden. Es wird um die Rohrkupplung herumgeführt und dann an seinen beiden Enden miteinander verbunden. Dadurch ist eine Fixierung der Flammschutzeinrichtung an der Rohrkupplung realisiert. Zusätzliche Befestigungsvorgänge sind zwar möglich, in der Regel aber nicht erforderlich. Darüber hinaus ergibt sich eine Flammschutzeinrichtung, die ein zumindest weitgehend geschlossenes Gehäuse aufweist.

Hierbei ist bevorzugt, dass die erste Befestigungsgeometrie mindestens eine Lasche und die zweite Befestigungsgeometrie mindestens einen Schlitz aufweist, durch den die Lasche hindurch führbar ist. Um den Eingriff zwischen den beiden Befestigungsgeometrien zu bewerkstelligen, wird die Lasche einfach durch den Schlitz hindurch geführt und gegebenenfalls umgebogen. Damit ist eine formschlüssige Verbindung zwischen den beiden Enden des Gehäuses realisiert und das Gehäuse mit der darin befestigten Flammschutzeinlage sitzt in ausreichendem Maße fest um die Rohrkupplung.

Vorzugsweise weist das Gehäuse an einem Umfangsende einen Gehäusekopf auf, der an seinen axialen Enden radial nach innen abgewinkelte Wände aufweist. Damit ist es auf einfache Weise möglich, auch die Spanneinrichtung der Rohrkupplung, die in der Regel eine oder mehrere Schraubbolzen aufweist, mit in den Flammschutz einzubeziehen. Die abgewinkelten Wände sorgen dafür, dass eine Umfangswand der Flammschutzeinrichtung einen ausreichenden Abstand zu den Rohrenden aufweist, die durch die Flammschutzeinrichtung abgedeckt sind. In diesem Abstand kann dann die Spanneinrichtung der Rohrkupplung untergebracht sein.

Hierbei ist bevorzugt, dass der Gehäusekopf mindestens eine Durchgangsöffnung in seiner Umfangswand aufweist. Durch die Durchgangsöffnung ist nach wie vor ein Zugriff auf die Spanneinrichtung möglich. Beispielsweise kann durch die Durchgangsöffnung ein Werkzeug geführt werden, mit dem die Spanneinrichtung gespannt oder gelöst werden kann. Ein derartiges Werkzeug kann beispielsweise ein Innensechskantschlüssel sein.

Die Rohrkupplung kann sowohl im eingebauten Zustand mit der Flammschutzeinrichtung versehen werden als auch in fabrikneuem Zustand. Auch eine mit einer Flammschutzeinrichtung bereits versehene Rohrkupplung, bei der die Flammschutzeinlage am Gehäuse befestigt ist, kann in ansonsten unveränderter Weise wie eine sonstige mit Flammschutzeinrichtung versehene Rohrkupplung montiert werden.

Vorzugsweise ist die Rohrkupplung mit dem Gehäuse der Flammschutzeinrichtung über ein Fügeelement verbunden. Insbesondere dann, wenn die Rohrkupplung bereits von vorneherein mit der Flammschutzeinrichtung versehen sein soll, kann es vorteilhaft sein, ein Fügeelement, beispielsweise einen Niet zu verwenden, um die Rohrkupplung mit der Flammschutzeinrichtung zu verbinden, um auch während des Transports der mit der Flammschutzeinrichtung versehenen Rohrkupplung die gewünschte Zuordnung zwischen Flammschutzeinrichtung und Rohrkupplung aufrecht zu erhalten.

Hierbei ist bevorzugt, dass das Fügeelement durch ein sich in Umfangsrichtung erstreckendes Langloch im Gehäuse geführt ist. Wenn sich dann bei der Montage der Rohrkupplung an den Rohrenden eine Durchmesseränderung der Rohrkupplung ergibt, dann kann sich das Fügeelement in dem Langloch in gewünschtem Maße verschieben.

Alternativ oder zusätzlich kann das Gehäuse eine Hakenanordnung aufweisen, die mit der Rohrkupplung oder Teilen davon in Eingriff steht. Die Hakenanordnung kann beispielsweise dadurch gebildet sein, dass das Gehäuse der Flammschutzeinrichtung an einem oder beiden Enden umgebogen ist. Eine derartige Hakenanordnung hat bei der Montage der Flammschutzeinrichtung an einer eingebauten Rohrkupplung Vorteile, weil der Monteur dann das Gehäuse an der Rohrkupplung festhaken und um die Rohrkupplung herumführen kann.

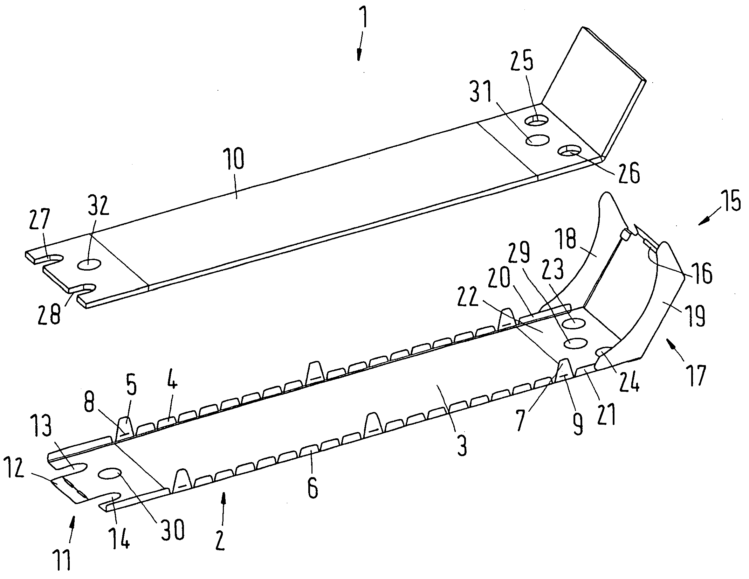

Die Erfindung wird im Folgenden anhand eines bevorzugten Ausführungsbeispiels in Verbindung mit einer Zeichnung beschrieben. Hierin zeigt
- die einzige Figur:: eine Flammschutzeinrichtung für eine Rohrkupplung in Explosionsdarstellung.

Die Figur zeigt eine Flammschutzeinrichtung 1 für eine nicht näher dargestellte Rohrkupplung in Explosionsdarstellung und im ausgebreiteten Zustand.

Die Flammschutzeinrichtung 1 weist ein die Rohrkupplung später umgebendes Gehäuse 2 auf, das hier noch in gestreckter oder abgewinkelter Form dargestellt ist. Das Gehäuse 2 ist beispielsweise aus einem Blech gebildet, dessen Stärke so gering ist, dass es manuell gebogen werden kann.

Das Gehäuse 2 weist eine Umfangswand 3 auf, die im montierten Zustand die Rohrkupplung umgibt. An seinen beiden axialen Stirnseiten weist das Gehäuse jeweils eine Wand aus mehreren Abschnitten 4-7 auf, die radial nach innen ragen. Die Abschnitte 4-7 sind radial nach innen umgebogen und in Umfangsrichtung voneinander getrennt, so dass es trotz der Abschnitte 4-7 möglich ist, die Umfangswand um die Rohrkupplung herum zu biegen.

Die Abschnitte 5, 7 sind länger als die Abschnitte 4, 6, d. h. sie stehen in der dargestellten Position radial weiter nach innen vor. Diese längeren Abschnitte 5, 7 weisen jeweils einen Schlitz 8, 9 auf, der eine Materialschwächung der Abschnitt 5, 7 bewirkt. Im Bereich der Schlitze 8, 9 können die längeren Abschnitte 5, 7 später axial nach innen umgebogen werden, wie weiter unten erläutert werden wird.

Die Flammschutzeinrichtung 1 weist weiterhin eine Flammschutzeinlage 10 auf, die beispielsweise aus einem Glasfasermaterial oder einem Mineralfasermaterial gebildet ist. Es ist auch möglich, hier einen microporösen Dämmstoff zu verwenden. Die Flammschutzeinlage 10 hat im Wesentlichen die gleiche Länge wie das Gehäuse 2. Sie kann allerdings auch etwas kürzer ausgebildet sein.

Die Flammschutzeinrichtung 1 kann nun dadurch gebildet werden, dass die Flammschutzeinlage 10 auf die radiale Innenseite der Umfangswand 3 aufgelegt wird und dabei zwischen den Abschnitten 4-7 zu liegen kommt. Danach werden die längeren Abschnitte 5, 7 axial nach innen umgebogen. Die Schlitze 8, 9 haben dabei eine Entfernung von der Umfangswand 3, die etwa der Dicke der Flammschutzeinlage 10 entspricht. Dementsprechend halten die umgebogenen Teile der Abschnitte 5, 7 die Flammschutzeinlage 10 am Gehäuse 2 fest. Man kann die umgebogenen Bereiche der Abschnitte 5, 7 auch soweit umbiegen, dass sie mit einem gewissen Druck auf die Flammschutzeinlage 10 wirken. Die Flammschutzeinlage 10, die nach dem Umbiegen der längeren Abschnitte 5, 7 an mindestens zwei Positionen am Gehäuse 2 befestigt ist, ist dann sozusagen unverlierbar am Gehäuse 2 gehalten. Wenn die Flammschutzeinrichtung 1 dann um eine montierte Rohrschelle herumgeführt wird, besteht weder die Gefahr, dass die Flammschutzeinlage 10 verloren geht noch dass sie ihre Position zum Flammschutzgehäuse 2 verändert.

Das Flammschutzgehäuse 2 weist an einem ersten Umfangsende 11 eine erste Befestigungsgeometrie auf. Diese erste Befestigungsgeometrie weist im vorliegenden Ausführungsbeispiel eine Lasche 12 auf. Die Lasche 12 ist zwischen zwei Einschnitten 13, 14 angeordnet, erstreckt sich also nicht über die gesamte axiale Länge des Gehäuses 2.

Am zweiten Umfangsende 15 weist das Gehäuse 2 eine zweite Befestigungsgeometrie auf, die hier als Schlitz 16 ausgebildet ist. Die Lasche 12 kann durch den Schlitz 16 geführt werden, wenn das Gehäuse 2 mit der darin angeordneten Flammschutzeinlage 10 um die Rohrkupplung herumgeführt worden ist. Wenn man dann die Lasche 12 umbiegt, dann ist das Gehäuse praktisch vollständig geschlossen und das Gehäuse 2 ist formschlüssig an der Rohrkupplung fixiert.

Das Gehäuse 2 weist einen Gehäusekopf 17 auf, der gegenüber der Umfangswand 3 abgewinkelt ist. Der Gehäusekopf. 17 weist radial nach innen abgewinkelte Wände 18, 19 auf, die axial außerhalb einer von der Umfangswand 3 radial nach innen abgebogenen Lasche 20, 21 angeordnet sind. Die Umfangswand 3, genauer gesagt ein dem Gehäusekopf benachbarter Abschnitt 22, kann dann seine Winkeleinstellung gegenüber dem Gehäusekopf 17 etwas ändern, ohne dass diese Änderung durch die Wände 18, 19 blockiert wird.

In dem Abschnitt 22 sind zwei Durchgangsöffnungen 23, 24 vorgesehen, durch die ein Werkzeug geführt werden kann, mit dem eine Spanneinrichtung der Rohrkupplung gespannt oder gelöst werden kann. Die Spanneinrichtung kann beispielsweise durch Bolzen gebildet sein, die in entsprechende Gegenstücke eingeschraubt worden sind. Diese Bolzen können durch einen Schlüssel für einen Innensechskant verdreht werden, der durch die Durchgangsöffnungen 23, 24 geführt wird. Die Flammschutzeinlage 10 weist entsprechende Durchgangsöffnungen 25, 26 auf.

Am ersten Umfangsende 11 können entsprechende Werkzeuge durch die Einschnitte 13, 14 geführt werden. Auch die Flammschutzeinlage 10 weist entsprechende Einschnitte 27, 28 auf.

Wenn die Flammschutzeinrichtung 1 nicht an einer bereits montierten Rohrkupplung nachgerüstet werden soll, sondern an einer Rohrkupplung von vorneherein befestigt sein soll, dann kann es zweckmäßig sein, in der Umfangswand ein oder zwei Langlöcher 29, 30 vorzusehen. Entsprechende Langlöcher 31, 32 sollten dann in der Flammschutzeinlage 10 vorgesehen sein. Durch diese Langlöcher 29-32 kann dann ein Fügeelement geführt werden, beispielsweise ein Niet, um die Flammschutzeinrichtung 1 an der Rohrkupplung zu befestigen.

Die Flammschutzeinrichtung 1 kann sowohl an der Rohrkupplung nachgerüstet werden, wenn die Rohrkupplung in einem Rohrleitungsstrang eingebaut ist, als auch an einer neuen Rohrkupplung befestigt werden. In jedem Fall reicht es einfach aus, das Gehäuse 2 mit der darin befestigten Flammschutzeinlage 10 um die Rohrkupplung herumzulegen und die Lasche 12 durch den Schlitz 16 zu führen und anschließend umzubiegen. Weitere Bearbeitungen des Gehäuses 2 sind nicht erforderlich. Insbesondere ist es nicht erforderlich, irgendwelche Schweißnähte oder Schweißpunkte am Gehäuse 2 anzubringen.

In nicht näher dargestellter Weise kann man an einem oder beiden Umfangsenden Bereiche aus dem Gehäuse 2 herausbiegen, die man dann an der Rohrkupplung verhaken kann, um an einem Umfangsende des Gehäuses 2 eine Fixierung zu bewirken, die das Herumführen des Gehäuses 2 um die Rohrkupplung erleichtert.

## Patentansprüche

1. **Rohrkupplung** mit einer Flammschutzeinrichtung (1), die ein die Rohrkupplung umgebendes Gehäuse (2) und eine Flammschutzeinlage (10) an der Innenseite des Gehäuses (2) aufweist, wobei das Gehäuse (2) an seinen axialen Stirnseiten jeweils eine in Abschnitte (4-7) unterteilte, radial nach innen ragende Wand aufweist, wobei das Gehäuse (2) um die Rohrkupplung herum legbar ist, **dadurch gekennzeichnet, dass** die Flammschutzeinlage (10) vor der Montage des Gehäuses (2) auf die Innenseite des Gehäuses (2) aufgelegt und an mindestens zwei Positionen im Bereich ihrer Umfangsenden am Gehäuse (2) befestigt ist, wobei mindestens an den zwei Positionen ein Abschnitt (5, 7) der jeweils einen Wand radial länger als andere Abschnitte (4, 6) ist und auf die Flammschutzeinlage (10) umgebogen ist.

2. Rohrkupplung nach Anspruch 1, **dadurch gekennzeichnet, dass** der längere Abschnitt (5, 7) im Bereich einer Biegelinie eine Materialschwächung aufweist.

3. Rohrkupplung nach Anspruch 2, **dadurch gekennzeichnet, dass** die Materialschwächung mindestens einen Schlitz (8, 9) aufweist.

4. Rohrkupplung nach einem der Ansprüche 1 bis 3, **dadurch gekennzeichnet, dass** das Gehäuse (2) schweißlos gefertigt ist.

5. Rohrkupplung nach einem der Ansprüche 1 bis 4, **dadurch gekennzeichnet, dass** das Gehäuse (2) an jedem Umfangsende (11, 15) eine Befestigungsgeometrie aufweist, wobei eine erste Befestigungsgeometrie an einem Umfangsende mit einer zweiten Befestigungsgeometrie am anderen Umfangsende in Eingriff bringbar ist.

6. Rohrkupplung nach Anspruch 5, **dadurch gekennzeichnet, dass** die erste Befestigungsgeometrie mindestens eine Lasche (12) und die zweite Befestigungsgeometrie mindestens einen Schlitz (16) aufweist, durch den die Lasche (12) hindurch führbar ist.

7. Rohrkupplung nach Anspruch 5 oder 6, **dadurch gekennzeichnet, dass** das Gehäuse (2) an einem Umfangsende (15) einen Gehäusekopf (17) aufweist, der an seinen axialen Enden radial nach innen abgewinkelte Wände (18, 19) aufweist.

8. Rohrkupplung nach Anspruch 7, **dadurch gekennzeichnet, dass** der Gehäusekopf (17) mindestens eine Durchgangsöffnung (23, 24) in seiner Umfangswand aufweist.

9. Rohrkupplung nach einem der Ansprüche 1 bis 8, **dadurch gekennzeichnet, dass** die Rohrkupplung mit dem Gehäuse (2) der Flammschutzeinrichtung (1) über ein Fügeelement verbunden ist.

10. Rohrkupplung nach Anspruch 9, **dadurch gekennzeichnet, dass** das Fügeelement durch ein sich in Umfangsrichtung erstreckendes Langloch (29, 30) im Gehäuse (2) geführt ist.

11. Rohrkupplung nach einem der Ansprüche 1 bis 10, **dadurch gekennzeichnet, dass** das Gehäuse (2) eine Hakenanordnung aufweist, die mit der Rohrkupplung oder Teilen davon in Eingriff steht.

## Claims

1. Tube coupling with a flame-retardant device (1) which comprises a housing (2) surrounding the tube coupling and a flame-retardant insert (10) on the inside of the housing (2), wherein the housing (2) at its axial end sides comprises a wall respectively projecting radially inwardly and divided into sections (4-7), wherein the housing (2) can be placed around the tube coupling, **characterised in that** the flame-retardant insert (10) prior to the assembly of the housing (2) is placed on the inside of the housing (2) and is secured in at least two positions in the region of its circumferential ends on the housing (2), wherein in the two positions one section (5, 7) of the respective one wall is radially longer than the other sections (4, 6) and is bent around the flame-retardant insert (10).

2. Tube coupling according to claim 1, **characterised in that** the longer section (5, 7) has a material weakening in the region of a bending line.

3. Tube coupling according to claim 2, **characterised in that** the material weakening comprises at least one slit (8, 9).

4. Tube coupling according to any one of claims 1 to 3, **characterised in that** the housing (2) is produced without welding.

5. Tube coupling according to any one of claims 1 to 4, **characterised in that** the housing (2) has a fixing geometry at each circumferential end (11, 15), wherein a first fixing geometry at one circumferential end can be moved into engagement with a second fixing geometry at the other circumferential end.

6. Tube coupling according to claim 5, **characterised in that** the first fixing geometry comprises at least one tab (12) and the second fixing geometry comprises at least one slit (16), through which the tab (12) can be guided.

7. Tube coupling according to either claim 5 or 6, **characterised in that** the housing (2) comprises a housing head (17) at one peripheral end (15), which at its axial ends comprises radially inwardly angled walls (18, 19).

8. Tube coupling according to claim 7, **characterised in that** the housing head (17) comprises at least one through opening (23, 24) in its circumferential wall.

9. Tube coupling according to any one of claims 1 to 8, **characterised in that** the tube coupling is connected to the housing (2) of the flame-retardant device (1) by means of a joining element.

10. Tube coupling according to claim 9, **characterised in that** the joining element is guided through an elongated hole (29, 30) in the housing (2) extending in circumferential direction.

11. Tube coupling according to any one of claims 1 to 10, **characterised in that** the housing (2) comprises a hook arrangement which is in engagement with the tube coupling or parts thereof.

## Revendications

1. Couplage de tuyaux comprenant un dispositif anti-flamme (1), qui présente un boîtier (2) entourant le couplage de tuyaux et un insert anti-flamme (10) sur le côté intérieur du boîtier (2), dans lequel le boîtier (2) présente sur ses faces frontales axiales respectivement une paroi subdivisée en sections (4 à 7) dépassant radialement vers l'intérieur, dans lequel le boîtier (2) peut être disposé autour du couplage de tuyau, **caractérisé en ce que** l'insert anti-flammes (10) est appliqué sur le côté intérieur du boîtier (2) avant le montage du boîtier (2) et est fixé au boîtier (2) dans au moins deux positions dans la zone de ses extrémités périphériques, dans lequel, au moins dans les deux positions, une section (5, 7) de respectivement une paroi est radialement plus longue que les autres sections (4, 6) et est recourbée sur l'insert anti-flammes (10).

2. Couplage de tuyaux selon la revendication 1, **caractérisé en ce que** la section plus longue (5, 7) présente un affaiblissement du matériau dans la zone d'une ligne de flexion.

3. Couplage de tuyaux selon la revendication 2, **caractérisé en ce que** l'affaiblissement du matériau présente au moins une fente (8, 9).

4. Couplage de tuyaux selon l'une quelconque des revendications 1 à 3, **caractérisé en ce que** le boîtier (2) est fixé sans soudure.

5. Couplage de tuyaux selon l'une quelconque des revendications 1 à 4, **caractérisé en ce que** le boîtier (2) présente sur chaque extrémité périphérique (11, 15) une géométrie de fixation, dans lequel une première géométrie de fixation à une extrémité périphérique peut être amenée en prise avec une seconde géométrie de fixation sur l'autre extrémité périphérique.

6. Couplage de tuyaux selon la revendication 5, **caractérisé en ce que** la première géométrie de fixation présente au moins une éclisse (12) et la seconde géométrie de fixation présente au moins une fente (16) à travers laquelle l'éclisse (12) peut passer.

7. Couplage de tuyaux selon la revendication 5 ou la revendication 6, **caractérisé en ce que** le boîtier (2) présente sur une extrémité périphérique (15) une tête de boîtier (17) qui présente sur ses extrémités axiales des parois (18, 19) tournées radialement vers l'intérieur.

8. Couplage de tuyaux selon la revendication 7, **caractérisé en ce que** la tête de boîtier (17) présente au moins une ouverture de passage (23, 24) dans sa paroi périphérique.

9. Couplage de tuyaux selon l'une quelconque des revendications 1 à 8, **caractérisé en ce que** le couplage de tuyaux est relié au boîtier (2) du dispositif anti-flammes (1) via un élément d'assemblage.

10. Couplage de tuyaux selon la revendication 9, **caractérisé en ce que** l'élément d'assemblage est guidé dans le boîtier (2) à travers un trou allongé (29, 30) s'étendant dans la direction périphérique.

11. Couplage de tuyaux selon l'une quelconque des revendications 1 à 10, **caractérisé en ce que** le boîtier (2) présente un agencement d'accrochage qui s'engage sur le couplage de tuyaux ou des parties de celui-ci.
